# EUROPÄISCHE PATENTSCHRIFT

(11) **EP 1 894 069 B1**
(45) Veröffentlichungstag und Bekanntmachung des Hinweises auf die Patenterteilung: **29.10.2008**
(21) Anmeldenummer: 05759710.6
(22) Anmeldetag: 22.06.2005
(51) Int. Cl.: G05B 19/418

(54) **FELDGEERÄT**
FIELD DEVICE
APPAREIL SUR SITE

(43) Veröffentlichungstag der Anmeldung: 05.03.2008
(73) Patentinhaber: SIEMENS AKTIENGESELLSCHAFT, 80333 München (DE)
(72) Erfinder: JURISCH, Andreas, 16727 Schwante (DE); WENZEL, Volker, 16540 Hohen Neuendorf (DE)
(86) Internationale Anmeldenummer: PCT/DE2005/001128
(87) Internationale Veröffentlichungsnummer: WO 2006/136122

(56) Entgegenhaltungen:
- DE-A1- 10 158 745

## Beschreibung

Die Erfindung bezieht sich auf ein Feldgerät zum Überwachen eines Betriebszustandes einer elektrotechnischen Anlage mit den Merkmalen gemäß dem Oberbegriff des Anspruchs 1.

Ein derartiges Feldgerät wird beispielsweise von der Firma Siemens AG unter dem Produktnamen "SIPROTEC" vertrieben.

Es ist bekanntermaßen ein Schwerpunkt in der Prozessführung elektrotechnischer Anlagen, bei einem plötzlich auftretenden ungewöhnlichen Betriebszustand schnell und eindeutig zu erkennen, welcher Zustand eingetreten ist und welche Maßnahmen unverzüglich zu treffen sind. Beispielsweise können folgende Störungen auftreten:
- Es kommt zu wiederholten Anregungen eines Leitungsabganges durch einen Distanzschutz der elektrotechnischen Anlage. Die Erdschleife ist davon betroffen. In einem solchen Falle sollte sich das Wartungspersonal der elektrotechnischen Anlage möglichst schnell darum bemühen, die fehlerhafte Leitung frei zu schalten, weil möglicherweise ein Objekt im Leitungsraum (Baum, Kraftfahrzeug usw.) gefährdet sein könnte.
- Falls in einem Fehlerfalle keine Erdschleife beteiligt ist, sieht die erforderliche Reaktion anders aus: In diesem Falle kann es sich um eine langwellige Leiterseilschwingung handeln, so dass die Leitung wegen der gewünschen Netzstabilität eingeschaltet bleiben sollte.

Je nach Fehlerfall sind also unterschiedliche Maßnahmen zu ergreifen; die Erkenntnis, welche Maßnahme im Einzelfall die geeignete ist, muss aus einer sehr großen Anzahl an verfügbaren Informationen herausgefiltert werden. Die heutzutage verwendeten Kommunikationsstandards stellen technisch einen sehr hohen Datenstrom und damit eine sehr große Datenmenge zur Verfügung, die in Leitzentralen, beispielsweise so genannten Wartenterminals, ausgewertet werden muss. Aufgrund der Vielzahl der in den Leitzentralen einfließenden Daten besteht die Gefahr, dass das Wartungspersonal falsch handelt.

Um das Problem einer zu großen Datenflut in den Leitzentralen zu vermeiden, bieten die heutzutage üblichen Feldgeräte sowie auch die Leittechnik-Zentralgeräte der Leitzentralen "Informationsfilter" an, mit denen eine Informationsverdichtung bzw. Informationsfilterung durchgeführt wird. Diese Informationsverdichtung reduziert die vom Wartungspersonal auszuwertenden Informationen in der Leitzentrale bzw. im Wartenterminal und damit die Wahrscheinlichkeit von Fehlhandlungen.

Die heutzutage verfügbaren Feldgeräte weisen leider den Nachteil auf, dass bereits in der Projektierungsphase einer elektrotechnischen Anlage konkret festgelegt werden muss, in welcher Art und Weise die Feldgeräte der elektrotechnischen Anlage eine Informationsverdichtung durchführen sollen und an wen die jeweils informationsverdichteten Daten weitergeleitet werden müssen. Es ist bei den bisherigen Feldgeräten daher erforderlich, das Zusammenspiel der einzelnen Komponenten der elektrotechnischen Anlage im Detail vorab zu definieren. Abgesehen davon, dass eine solche Projektierung sehr aufwendig ist und hohe Kosten verursacht, lassen sich nachträglich Änderungen der elektrotechnischen Anlage nur mit hohem Aufwand durchführen, weil quasi eine "Neuprojektierung" der kompletten Anlage erforderlich ist.

Das Dokument DE 101 58 745 A1 beschreibt eine bekannte Anordnung zum Überwachen einer Anlage mit Feldgeräten.

Der Erfindung liegt die Aufgabe zugrunde, ein Feldgerät der eingangs angegebenen Art dahingehend fortzubilden, dass dieses den Aufbau elektrotechnischer Anlagen mit möglichst geringen Projektierungskosten ermöglicht. Außerdem soll eine nachträgliche Änderung des Aufbaus bzw. der Topologie der elektrotechnischen Anlage möglichst einfach und kostengünstig möglich sein.

Diese Aufgabe wird ausgehend von einem Feldgerät der eingangs angegebenen Art erfindungsgemäß durch die kennzeichnenden Merkmale des Anspruches 1 gelöst. Vorteilhafte Ausgestaltungen des erfindungsgemäßen Feldgerätes sind in Unteransprüchen angegeben.

Danach ist erfindungsgemäß vorgesehen, dass einer Auswerteinrichtung des Feldgerätes eine Kennung zugeordnet werden kann, die angibt, welcher Hierarchieebene die Auswerteinrichtung zugeordnet ist. Die Auswerteinrichtung ist außerdem derart angestaltet, dass sie nach einem Anschluss an ein Datenübertragungsnetzwerk selbsttätig mit anderen daran angeschlossenen Auswerteinrichtungen - sei es tatsächlich mit allen Auswerteinrichtungen oder mit allen Auswerteinrichtungen einer vorgegebenen Art - eine Datenverbindung herstellt, sofern diese unmittelbar untergeordneten oder unmittelbar übergeordneten Hierarchieebenen angehören. Die Auswerteinrichtung verarbeitet dann Ausgangssignale (z. B. Ausgangsdatensignale) hierarchisch untergeordneter Auswerteinrichtungen als Eingangssignale (z. B. Eingangsdatensignale) weiter und überträgt ihre eigenen Ausgangsdatensignale zu hierarchisch übergeordneten Auswerteinrichtungen.

Ein wesentlicher Vorteil des erfindungsgemäßen Feldgerätes ist darin zu sehen, dass dieses eine Vorverdichtung von Informationen ermöglicht, ohne dass die konkrete Abarbeitungsfolge der Datenverdichtung bereits in der Projektierungsphase der elektrotechnischen Anlage definiert oder festgelegt werden muss. Dieser Vorteil wird dadurch erzielt, dass die Auswerteinrichtung des Feldgeräts selbsttätig "vernetzungsfähig" ist; dies bedeutet, dass die Auswerteinrichtung in der Lage ist, nach einem Anschluss an ein Datenübertragungsnetzwerk selbsttätig mit anderen Auswerteinrichtungen Kontakt aufzunehmen und mit diesen selbsttätig eine hierarchisch organisierte Struktur zur Datenauswertung und Datenverdichtung aufzubauen. Um den Aufbau der Struktur zu ermöglichen, ist lediglich Voraussetzung, dass jeder Auswerteinrichtung eine Kennung vorgegeben wird, die die Hierarchieebene der jeweiligen Auswerteinrichtung festlegt. Im Unterschied zu vorbekannten Feldgeräten, bei denen für jede Auswerteinrichtung bereits bei der Projektierung der elektrotechnischen Anlage ganz konkret festgelegt werden muss, mit welchen anderen Auswerteinrichtungen - sei es mit Auswerteinrichtungen innerhalb ein und desselben Feldgeräts oder mit "externen" Auswerteinrichtungen anderer Feldgeräte - Daten ausgetauscht werden sollen, ist diese konkrete Festlegung bei dem erfindungsgemäßen Feldgerät gerade nicht erforderlich; denn ausgehend von der vorgegebenen Hierarchieebene ermittelt die Auswerteinrichtung selbst, welche "Partner" zur Informationsverdichtung die "richtigen" sind. Mit anderen Worten organisiert die Auswerteinrichtung des erfindungsgemäßen Feldgeräts die Bildung ihrer Datenverbindungen und damit die Arbeitsweise der elektrotechnischen Anlage sowie die Abfolge der Datenverdichtung selbsttätig, indem sie je nach ihrer jeweiligen Hierarchie-Kennung die entsprechenden Auswerteinrichtungen unmittelbar über- und untergeordneter Hierarchieebenen ermittelt, mit diesen Kontakt aufnimmt und anschließend mit diesen kooperiert. Die Festlegung der Partner-Auswerteinrichtungen erfolgt dabei erst mit Inbetriebnahme bzw. nach einem Anschluss an ein Datenübertragungsnetzwerk; in der Projektierungsphase der elektrotechnischen Anlage ist eine Festlegung konkreter Geräte- bzw. Datenverbindungen für die Auswerteinrichtungen - im Gegensatz zu den bisher bekannten Feldgeräten - nicht erforderlich. Zusammengefasst wird der Auswerteinrichtung des Feldgerätes erfindungsgemäß lediglich eine "Ebene" innerhalb der späteren Hierarchie zugewiesen; die sich daraus ergebene tatsächliche Daten-Vernetzung der Auswerteinrichtungen untereinander legen diese selbst fest.

Ein weiterer wesentlicher Vorteil des erfindungsgemäßen Feldgerätes ist darin zu sehen, dass dieses auf eine Änderung der Topologie der elektrotechnischen Anlage automatisch selbst reagieren kann. Werden beispielsweise neue Feldgeräte zu einer bestehenden elektrotechnischen Anlage hinzugefügt, so müssen bei Feldgeräten der vorbekannten Art alle erforderlichen neuen Datenverbindungen "per Hand" vom Wartungspersonal festgelegt werden. Im Unterschied dazu erkennen die erfindungsgemäßen Feldgeräte die Änderung der Topologie der elektrotechnischen Anlage automatisch selbst, weil nämlich bei Anschluss eines zusätzlichen Feldgerätes ein Verbindungsaufbau zu über- oder untergeordneten Feldgeräten selbsttätig ausgelöst wird; die Struktur der Datenverbindungen wird also automatisch an die neue Anlagentopologie angepasst.

Die beschriebene Vernetzung der Auswerteinrichtungen kann geräteintern und/oder geräteextern erfolgen: Enthält das Feldgerät "geräteintern" beispielsweise zwei oder mehr Auswerteinrichtungen, die über ein feldgeräteinternes Datenübertragungsnetzwerk miteinander verbunden sind, so wird es als vorteilhaft angesehen, wenn die zumindest zwei Auswerteinrichtungen jeweils nach Aktivierung des feldgeräteinternen Datenübertragungsnetzwerks selbsttätig mit hierarchisch unmittelbar untergeordneten und/oder unmittelbar übergeordneten Auswerteinrichtungen des "eigenen" Feldgerätes eine Datenverbindung herstellen.

Steht die Auswerteinrichtung mit einem Anschluss für ein externes Datenübertragungsnetzwerk in Verbindung, mit dem sich das Feldgerät mit externen anderen Feldgeräten verbinden lässt, so ist die Auswerteinrichtung des Feldgerätes vorzugsweise derart ausgestaltet, dass sie nach Anschluss an das externe Datenübertragungsnetzwerk selbsttätig mit allen anderen daran angeschlossenen Auswerteinrichtungen anderer Feldgeräte oder mit anderen daran angeschlossenen Auswerteinrichtung einer vorgegebenen Art jeweils eine Datenverbindung herstellt, sofern diese einer unmittelbar untergeordneten oder eine unmittelbar übergeordneten Hierarchieebene angehören.

Vorzugsweise weist die Auswerteinrichtung eine Kommunikationseinrichtung auf, die nach einem Anschluss an ein internes oder externes Datenübertragungsnetzwerk selbsttätig mit Kommunikationseinrichtungen anderer Auswerteinrichtungen eine Datenverbindung herstellt, sofern diese einer unmittelbar untergeordneten oder einer unmittelbar übergeordneten Hierarchieebene angehören.

Mit der Kommunikationseinrichtung verbunden ist bevorzugt eine Analyseeinrichtung, die Ausgangsdatensignale von Analyseeinrichtungen hierarchisch untergeordneter Auswerteinrichtungen als Eingangsdatensignale weiterverarbeitet und eigene Ausgangsdatensignale mittels der ihr zugeordneten Kommunikationseinrichtung an Analyseeinrichtungen hierarchisch übergeordneter Auswerteinrichtungen weiterleitet.

Bevorzugt ist die Analyseeinrichtung mit einem Anregefilter und einem dem Anregefilter nachgeordneten Fallindikationsfilter ausgestattet, das die Ausgangsdatensignale der Auswerteinrichtung erzeugt, wobei das Fallindikationsfilter ausschließlich dann aktiviert wird, wenn das Anregefilter angesprochen hat. Die Auswerteinrichtung leitet eigene Ausgangsdatensignale an hierarchisch übergeordnete Auswerteinrichtungen vorzugsweise ausschließlich dann weiter, wenn das Fallindikationsfilter aktiviert wurde.

Das Anregefilter und/oder das Fallindikationsfilter werden vorteilhaft dynamisch ergänzt, um eine Anpassung an sich ändernde äußere Umstände zu ermöglichen.

Bei der Weiterverarbeitung der Eingangsdatensignale hierarchisch untergeordneter Auswerteinrichtungen erfolgt vorzugsweise eine Informationsverdichtung derart, dass die Ausgangsdatensignale eine höhere Informationsdichte aufweisen als die Eingangsdatensignale. Beispielsweise erfolgt die Informationsverdichtung, indem Informationsanteile der Eingangsdatensignale, die für das Charakterisieren des Betriebszustandes der elektrotechnischen Anlage keine oder eine untergeordnete Bedeutung aufweisen, weggelassen werden.

Die Auswerteinrichtung verwendet bevorzugt Datenverbindungen nach der Norm IEC61850. Beispielsweise vergleicht die Analyseeinrichtung der Auswerteinrichtung als Eingangsdatensignale die im Object Directory des IEC61850-Standards hinterlegten Augenblickszustände mit Zustandsmasken bzw. Ereignislisten, die feldgeräteindividuell oder feldgeräteunabhängig im Feldgerät hinterlegt sind.

Zur Bestimmung der Anlagentopologie wertet die Auswerteinrichtung bevorzugt Ausgangsdatensignale einer hierarchisch untergeordneten Auswerteeinrichtung im Hinblick auf die schaltungstechnische Zuordnung der untergeordneten Auswerteeinrichtung innerhalb der elektrotechnischen Anlage aus. Vorteilhaft greift die Auswerteinrichtung dabei zur Topologie-Zuordnung der untergeordneten Auswerteeinrichtung auf gemäß IEC61850-Standard abgespeicherte Anlagentopologiedaten der elektrotechnischen Anlage zurück.

Als Erfindung wird außerdem eine elektrotechnische Anlage (ein elektrotechnisches System) mit zumindest zwei durch ein Datenübertragungsnetzwerk verbundenen Feldgeräten angesehen.

Um bei der Projektierung einer solchen Anlage möglichst geringe Projektierungskosten zu erzielen und um eine nachträgliche Änderung des Aufbaus bzw. der Topologie der elektrotechnischen Anlage möglichst einfach und kostengünstig zu ermöglichen, wird erfindungsgemäß vorgeschlagen, Feldgeräte der beschriebenen erfindungsgemäßen Art einzusetzen. Diese Feldgeräte sind derart beschaffen, dass sie nach einem Anschluss an ein Datenübertragungsnetzwerk selbsttätig mit allen anderen daran angeschlossenen Feldgeräten eine Datenverbindung herstellen, die einer unmittelbar untergeordneten oder einer unmittelbar übergeordneten Hierarchieebene angehören. Anschließend verarbeiten sie die Ausgangsdatensignale hierarchisch untergeordneter Feldgeräte als Eingangsdatensignale und leiten eigene Ausgangsdatensignale an hierarchisch übergeordnete Feldgeräte weiter.

Die Erfindung wird nachfolgend anhand von Ausführungsbeispielen erläutert. Dabei zeigen
- Figur 1: ein Ausführungsbeispiel für eine erfindungsgemäße elektrische Anlage mit drei erfindungsgemäßen Feldgeräten,
- Figur 2: ein Ausführungsbeispiel für eine Auswerteinrichtung, die jeweils für die drei Geräte der Anordnung gemäß Figur 1 geeignet ist, und
- Figur 3: ein weiteres Ausführungsbeispiel für ein erfindungsgemäßes Feldgerät.

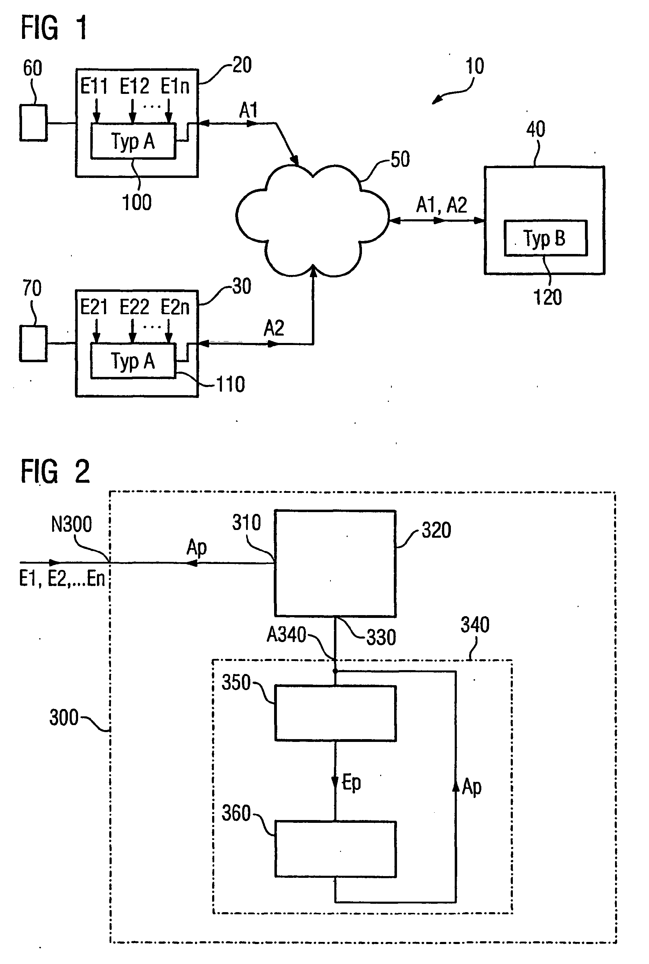

In der Figur 1 erkennt man eine elektrotechnische Anlage 10, die drei Feldgeräte 20, 30 und 40 aufweist, die über ein Datenübertragungsnetzwerk 50 miteinander in Verbindung stehen.

Bei dem Feldgerät 20 handelt es sich um ein Distanzschutzgerät, das eingangsseitig mit Messwandlern 60 in Verbindung steht. Das Feldgerät 30 ist ein Differentialschutzgerät, dem eingangsseitig Messwandler 70 vorgeschaltet sind. Bei dem Feldgerät 40 handelt es sich um ein Stationszentralgerät, das den beiden Feldgeräten 20 und 30 hierarchisch übergeordnet ist.

Wie sich in der Figur 1 erkennen lässt, sind die drei Feldgeräte 20, 30 und 40 jeweils mit einer Auswerteinrichtung 100, 110 und 120 ausgestattet. Die beiden Auswerteinrichtungen 100 und 110 gehören einer ersten Hierarchieebene an und tragen demgemäß eine Hierarchiekennung "Typ A". Die Auswerteinrichtung 120 des Stationszentralgerätes 40 gehört einer unmittelbar übergeordneten Hierarchieebene an; demgemäß ist der Auswerteinrichtung 120 des Stationszentralgerätes 40 die Hierarchiekennung "Typ B" zugeordnet.

Die elektrotechnische Anlage gemäß Figur 1 wird wie folgt betrieben:

Die Auswerteinrichtung 100 des Distanzschutzgerätes 20 sowie die Auswerteinrichtung 110 des Differentialschutzgerätes 30 werten jeweils ihre eingangsseitig anliegenden Eingangsdatensignale E11, E12,..., E1n bzw. E21, E22,..., E2n aus. Die Eingangsdatensignale können beispielsweise von den vorgeordneten Messwandlern 60 oder 70 oder von anderen, in der Figur 1 nicht dargestellten Feldgeräten stammen, die zu einer untergeordneten Hierarchieebene gehören.

Die Auswerteinrichtungen 100 und 110 untersuchen die eingangsseitig anliegenden Eingangsdatensignale E11 bis E1n bzw. E21 bis E2n auf das Vorliegen vorgegebener, in der Auswerteinrichtung abgespeicherter Zustände. Sobald ein entsprechend abgespeicherter Zustand entdeckt wird, erzeugen die Auswerteinrichtungen 100 und 110 entsprechende Ausgangsdatensignale A1 bzw. A2 und übertragen diese über das Datenübertragungsnetzwerk 50 zu der hierarchisch übergeordneten Auswerteinrichtung 120 des Stationszentralgerätes 40.

In dem Stationszentralgerät 40 werden die eingangsseitig anliegenden Signale A1 und A2, die somit Eingangsdatensignale der Auswerteinrichtung 120 darstellen, ein weiteres Mal ausgewertet. Ein solches Auswerten kann beispielsweise dadurch erfolgen, dass die Datensignale A1 und A2, die Augenblickszustände der elektrotechnischen Anlage 10 charakterisieren, mit hinterlegten Zustandsmasken verglichen werden; ist ein solcher Vergleich erfolgreich, so wird auf das Vorliegen eines vorgegebenen Zustandes, beispielsweise eines Fehlerzustandes, geschlossen.

Die Auswerteinrichtungen 100, 110 und 120 sind derart ausgestaltet, dass sie nach Anschluss an das Datenübertragungsnetzwerk 50 selbsttätig bzw. automatisch nach anderen Auswerteinrichtungen suchen, die an das Datenübertragungsnetzwerk 50 angeschlossen sind. Eine solche "Partnersuche" lässt sich sehr einfach beispielsweise mittels eines ETHERNET-IP-Broadcasts wie in RFC 1180 beschrieben (veröffentlicht u. a. im Internet unter http://www.ietf.org/rfc/rfc1180.txthttp://www.faqs.org/rfcs/r fc1180.html) durchführen, weil dieser Standard den an das Datenübertragungsnetzwerk 50 angeschlossenen Geräten erlaubt, Suchanfragen nach Partnern zu starten, deren Existenz vorab nicht sicher feststeht. Hierzu senden die Auswerteinrichtungen entsprechende Broadcast-Signale zur Verbindungssuche.

Im Rahmen der Suchanfrage versucht jede der Auswerteinrichtungen 100, 110 und 120 jeweils eine Datenverbindung zu allen anderen Auswerteinrichtungen herzustellen, die unmittelbar über- oder untergeordnet sind. Im konkreten Fall wird somit die Auswerteinrichtung 100 feststellen, dass in dem Stationszentralgerät 40 die Auswerteinrichtung 120 vorhanden ist, die der Hierarchie "Typ B" zugeordnet und somit übergeordnet ist. Demgemäß wird die Auswerteinrichtung 100 versuchen, eine Datenverbindung mit der Auswerteinrichtung 120 herzustellen.

Die Auswerteinrichtung 110 arbeitet entsprechend und wird somit versuchen, ebenfalls mit der Auswerteinrichtung 120 in eine Datenverbindung zu treten.

Da die beiden Auswerteinrichtungen 100 und 110 derselben Hierarchieebene angehören, werden die beiden Auswerteinrichtungen 100 und 110 hingegen nicht versuchen, direkt miteinander Kontakt aufzunehmen; denn die Kontaktaufnahme erfolgt bei der elektrotechnischen Anlage gemäß Figur 1 ausschließlich in Richtung höherer oder niedrigerer Hierarchieebene.

Die Funktionsweise der Auswerteinrichtungen 100, 110 und 120 wird nachfolgend im Detail im Zusammenhang mit der Figur 2 erläutert. In der Figur 2 ist ein Ausführungsbeispiel für eine Auswerteinrichtung dargestellt, die in dem Distanzschutzgerät 20, in dem Differentialschutzgerät 30 oder in dem Stationszentralgerät 40 gemäß Figur 1 eingesetzt werden kann. Das Ausführungsbeispiel für die Auswerteinrichtung ist in der Figur 2 mit dem Bezugszeichen 300 gekennzeichnet.

Die Auswerteinrichtung 300 weist zum Anschluss an das Datenübertragungsnetzwerk 50 gemäß Figur 1 einen Netzwerkanschluss N300 auf, der eingangsseitig mit einem Anschluss 310 einer Kommunikationseinrichtung 320 verbunden ist. Die Kommunikationseinrichtung 320 steht über einen weiteren Anschluss 330 mit einer Analyseeinrichtung 340 in Verbindung. Die Analyseeinrichtung 340 weist ein Anregefilter 350 auf, das eingangsseitig mit dem weiteren Anschluss 330 der Kommunikationseinrichtung 320 verbunden ist. Ausgangsseitig ist dem Anregefilter 350 ein Fallindikationsfilter 360 nachgeordnet, das ausgangsseitig mit dem weiteren Anschluss 330 der Kommunikationseinrichtung 320 in Verbindung steht.

Die Auswerteinrichtung 300 gemäß Figur 2 arbeitet wie folgt:

Sobald an dem Netzwerkanschluss N300 der Auswerteinrichtung 300 Eingangsdatensignale E1, E2, ... En - z. B. die Ausgangsdatensignale A1 und A2 der Feldgeräte 20 und 30 gemäß der Figur 1 - anliegen, werden diese über die Kommunikationseinrichtung 320 empfangen und zur Analyseeinrichtung 340 weitergeleitet. Das Anregefilter 350 der Analyseeinrichtung 340 vergleicht die Eingangsdatensignale E1 bis En, die beispielsweise Augenblickszustände des IEC61850 Object Directory darstellen, mit vordefinierten Zustandsmasken, die geräteabhängig oder geräteunabhängig in dem Anregefilter 350 hinterlegt sind. In den Zustandsmasken des Anregefilters 350 konzentriert sich sozusagen das Expertenwissen, das zur Auswertung der eingangsseitig anliegenden Eingangsdatensignale herangezogen wird.

Wird in dem Anregefilter 350 eine Übereinstimmung zwischen den Eingangsdatensignalen E1 bis En einerseits und den Zustandsmasken andererseits festgestellt, so werden die entsprechenden Eingangsdatensignale - bei dem Beispiel gemäß der Figur 2 beispielsweise das Eingangsdatensignal Ep - zum Fallindikationsfilter 360 weitergeleitet. In dem Fallindikationsfilter 360 wird festgestellt, ob bzw. was für ein Fehlerfall dem eingangsseitig anliegenden Eingangsdatensignal Ep entspricht. Je nach dem im Fallindikationsfilter 360 identifizierten Zustand wird ausgangsseitig ein Ausgangsdatensignal Ap erzeugt, das den im Fallindikationsfilter 360 erkannten Zustand bezeichnet. Das Ausgangsdatensignal Ap ist dabei im Vergleich zum Eingangsdatensignal Ep informationsverdichtet: Dies bedeutet, dass das Ausgangsdatensignal Ap mit einer geringeren Datenmenge als das Eingangsdatensignal Ep den jeweils erkannten Fehlerzustand identifiziert.

Das von dem Fallindikationsfilter 360 erzeugte Ausgangsdatensignal Ap gelangt über den Anschluss A340 der Analyseeinrichtung 340 zum weiteren Anschluss 330 der Kommunikationseinrichtung 320 und von dort zum Netzwerkanschluss N300 bzw. zum Datenübertragungsnetzwerk 50 gemäß Figur 1.

Zusammengefasst hat die Analyseeinrichtung 340 also die Funktion, eingangsseitig anliegende Eingangsdatensignale E1 bis En auszuwerten, in ihrem Informationsgehalt zu verdichten und ausgangsseitig informationsverdichtete Ausgangsdatensignale Ap zu erzeugen. Die Ausgangsdatensignale werden zum Datenübertragungsnetzwerk 50 übertragen und von diesem wiederum an hierarchiemäßig übergeordnete Auswerteinrichtungen weitergeleitet.

Beim Ausführungsbeispiel gemäß Figur 2 weist die Analyseeinrichtung 340 lediglich ein einziges Anregefilter 350 und ein einziges Fallindikationsfilter 360 auf. Alternativ kann die Analyseeinrichtung 340 auch eine Mehrzahl derartiger Anrege- und Fallindikationsfilter aufweisen, die kaskadiert oder hierarchisch aneinander gereiht sind und somit in der Lage sind, auch sehr komplexe Vorgänge bzw. Zustände zu erkennen. Die hierarchische Anordnung bzw. Vernetzung dieser Vielzahl an Filtern innerhalb der Analyseeinrichtung 340 kann beispielsweise fest vorgegeben sein; alternativ ist es auch möglich, den jeweiligen Filtern lediglich eine Hierarchiekennung vorzugeben, so dass sich die Filter in Abhängigkeit von ihrer jeweiligen Hierarchiekennung innerhalb der Analyseeinrichtung 340 selbst vernetzen, wie dies analog auch die Auswerteinrichtungen 100, 110 und 120 in der elektrotechnischen Anlage 10 gemäß Figur 1 tun.

Die Anregefilter 350 sowie die Fallindikationsfilter 360 der Analyseeinrichtung 340 können fest programmierte Filter oder dynamisch ergänzbare Filter sein; im letzteren Fall lassen sich die Filtereigenschaften dynamisch ändern oder ergänzen, um das Filterergebnis anzupassen oder zu verbessern.

Die Auswerteinrichtung 300 gemäß Figur 2 kann die eingangsseitig in Form der Eingangsdatensignale E1 bis En anliegende Informationsflut beispielsweise reduzieren, indem sie mit der Analyseeinrichtung 340 die Eingangsdatensignale nach Ereignistypen - wie beispielsweise Netzfehler, Einschaltvorgang, Spannungseinbruch, oberwellenhaltige Spannungsstörung etc. - klassifiziert und sortiert. Die Analyseeinrichtung 340 kann anschließend die in dieser Weise erfassten Informationen zusammenfassen und damit "komprimierte" Ausgangsdatensignale Ap erzeugen, die ausschließlich das Ergebnis des zuvor durchgeführten Filtervorganges wiedergeben. Dabei werden den Ausgangsdatensignalen Ap beispielsweise anlagenspezifische Kennungen unter Verwendung des Standards IEC61850 mitgegeben, die eine Identifikation der von dem jeweiligen Ereignis betroffenen Anlagenteile der elektrotechnischen Anlage 10 gemäß Figur 1 durch das hierarchisch übergeordnete Feldgerät (z. B. Stationszentralgerät oder Leittechnikzentralgerät) ermöglichen. Um eine solche Identifikation der betroffenen Anlagenteile zu vereinfachen, werden die Anlagendaten der elektrotechnischen Anlage vorzugsweise unter Verwendung der Objektstruktur des Standards IEC61850 definiert und den Feldgeräte entsprechend zur Verfügung gestellt.

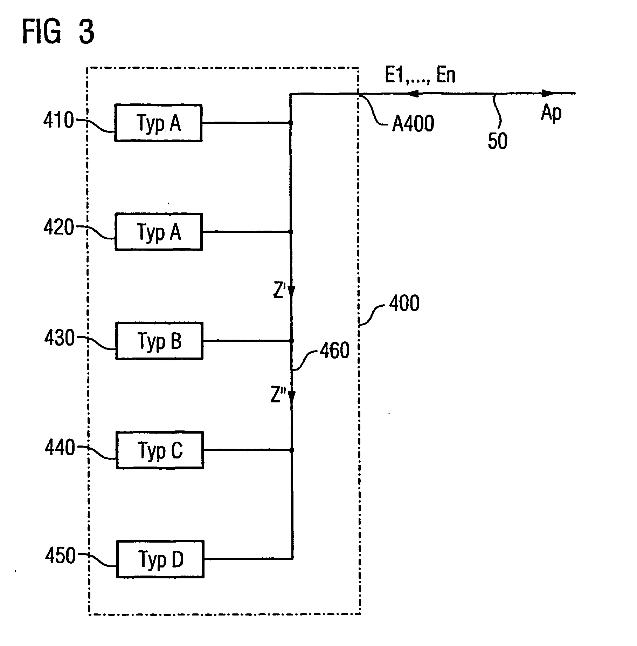

Die Figur 3 zeigt ein weiteres Ausführungsbeispiel für ein erfindungsgemäßes Feldgerät. Dieses Feldgerät 400 weist im Unterschied zu den Feldgeräten gemäß der Figur 1 fünf Auswerteinrichtungen 410, 420, 430, 440 und 450 auf. Diese Auswerteinrichtungen sind über ein feldgeräteinternes Datenübertragungsnetzwerk 460 miteinander verbunden.

Die fünf Auswerteinrichtungen stellen jeweils nach Aktivierung des feldgeräteinternen Datenübertragungsnetzwerkes 460 selbsttätig Datenverbindungen her, und zwar jeweils mit hierarchisch unmittelbar untergeordneten und unmittelbar übergeordneten Auswerteinrichtungen. Im Ergebnis treten die Auswerteinrichtungen 410 und 420 (jeweils "Typ A") mit der übergeordneten Auswerteinrichtung 430 ("Typ B") in Verbindung - und umgekehrt-, die Auswerteinrichtung 430 mit der übergeordneten Auswerteinrichtung 440 ("Typ C") - und umgekehrt- und die Auswerteinrichtung 440 mit der übergeordneten Auswerteinrichtung 450 ("Typ D") - und umgekehrt-.

Eingangsseitig anliegende Eingangssignale E1 bis En gelangen somit zunächst zu den beiden Auswerteinrichtungen 410 und 420 und werden dort zu Zwischensignalen Z' datenkomprimiert. Die Zwischensignale Z' gelangen zur übergeordneten Auswerteinrichtung 430, die eine weitere Filterung vornimmt und komprimierte Zwischensignale Z " bildet. Diese werden in den Auswerteinrichtungen 440 und 450 jeweils noch weiter "informationsverdichtet" und gelangen als Ausgangssignale Ap an einen Anschluss A400 zur Verbindung des Feldgerätes 400 mit einem externen Datenübertragungsnetzwerk 50.

### Bezugszeichenliste

- 10: elektrotechnische Anlage
- 20: Distanzschutzgerät
- 30: Differentialschutzgerät
- 40: Stationszentralgerät
- 50: Datenübertragungsnetzwerk
- 60: Messwandler
- 70: Messwandler
- 100: Auswerteinrichtung
- 110: Auswerteinrichtung
- 120: Auswerteinrichtung
- 300: Auswerteinrichtung
- 310: Anschluss
- 320: Kommunikationseinrichtung
- 330: weiterer Anschluss
- 340: Analyseeinrichtung
- A340: Anschluss
- 350: Anregefilter
- 360: Fallindikationsfilter
- 400: Feldgerät
- A400: Anschluss für Datenübertragungsnetzwerk
- 410-450: Auswerteinrichtungen
- 460: geräteinternes Datenübertragungsnetzwerk
- E1-En: Eingangsdatensignale
- E11-E1n: Eingangsdatensignale
- E2-E2n: Eingangsdatensignale
- Ap: Ausgangsdatensignale

## Patentansprüche

1. Feldgerät (20, 30, 40) zum Überwachen eines Betriebszustandes einer elektrotechnischen Anlage (10), insbesondere eines Umspannwerkes oder einer Schaltstation, mit einer Auswerteinrichtung (100, 110, 120), die eingangsseitig anliegende, sich auf die elektrotechnische Anlage beziehende Eingangssignale (E11-E1n, E21-E2n) nach vorgegebenen Kriterien auswertet und ausgangsseitig ein das jeweilige Auswertergebnis charakterisierendes Ausgangssignal (Ap) erzeugt,
**dadurch gekennzeichnet,**
- **dass** der Auswerteinrichtung eine Kennung ("Typ A", "Typ B") vorgebbar ist, die angibt, welcher Hierarchieebene die Auswerteinrichtung zugeordnet ist, und
- **dass** die Auswerteinrichtung derart ausgestaltet ist, dass sie nach einem Anschluss an ein Datenübertragungsnetzwerk (50) selbsttätig eine Datenverbindung mit allen anderen daran angeschlossenen Auswerteinrichtungen oder mit allen anderen daran angeschlossenen Auswerteinrichtungen einer vorgegebenen Art herstellt, die einer unmittelbar untergeordneten oder einer unmittelbar übergeordneten Hierarchieebene angehören,
- wobei die Auswerteinrichtung die Ausgangssignale hierarchisch untergeordneter Auswerteinrichtungen als Eingangssignale weiterverarbeitet und eigene Ausgangssignale an hierarchisch übergeordnete Auswerteinrichtungen weiterleitet.

2. Feldgerät nach Anspruch 1,
**dadurch gekennzeichnet, dass**
das Feldgerät (400) zumindest zwei Auswerteinrichtungen (410-450) aufweist, die über ein feldgeräteinternes Datenübertragungsnetzwerk (460) miteinander verbunden sind.

3. Feldgerät nach Anspruch 2,
**dadurch gekennzeichnet, dass**
die zumindest zwei Auswerteinrichtungen jeweils nach Aktivierung des feldgeräteinternen Datenübertragungsnetzwerkes selbsttätig mit hierarchisch unmittelbar untergeordneten und/oder unmittelbar übergeordneten Auswerteinrichtungen des Feldgerätes eine Datenverbindung herstellen.

4. Feldgerät nach einem der voranstehenden Ansprüche,
**dadurch gekennzeichnet, dass**
das Feldgerät einen Anschluss für ein externes Datenübertragungsnetzwerk (50) zum Anschluss an externe andere Feldgeräte aufweist.

5. Feldgerät nach Anspruch 4,
**dadurch gekennzeichnet, dass**
die Auswerteinrichtung des Feldgerätes derart ausgestaltet ist, dass sie nach Anschluss an das externe Datenübertragungsnetzwerk selbsttätig mit allen anderen daran angeschlossenen Auswerteinrichtungen anderer Feldgeräte oder mit allen anderen daran angeschlossenen Auswerteinrichtungen einer vorgegebenen Art der anderen Feldgeräte eine Datenverbindung herstellt, sofern diese einer unmittelbar untergeordneten oder einer unmittelbar übergeordneten Hierarchieebene angehören.

6. Feldgerät nach einem der voranstehenden Ansprüche,
**dadurch gekennzeichnet, dass**
- dass die Auswerteinrichtung eine Kommunikationseinrichtung (320) aufweist, die derart ausgestaltet ist, dass sie nach einem Anschluss an ein internes oder externes Datenübertragungsnetzwerk selbsttätig mit allen anderen daran angeschlossenen Kommunikationseinrichtungen anderer Auswerteinrichtungen oder mit allen anderen daran angeschlossenen Kommunikationseinrichtungen anderer Auswerteinrichtungen einer vorgegebenen Art eine Datenverbindung herstellt, sofern diese einer unmittelbar untergeordneten oder einer unmittelbar übergeordneten Hierarchieebene angehören und
- die Auswerteinrichtung eine mit der Kommunikationseinrichtung verbundene Analyseeinrichtung (340) aufweist, die Ausgangssignale von Analyseeinrichtungen hierarchisch untergeordneter Auswerteinrichtungen als Eingangssignale weiterverarbeitet und eigene Ausgangssignale mittels der zugeordneten Kommunikationseinrichtung an Analyseeinrichtungen hierarchisch übergeordneter Auswerteinrichtungen weiterleitet.

7. Feldgerät nach einem der voranstehenden Ansprüche,
**dadurch gekennzeichnet, dass**
die Auswerteinrichtung, insbesondere deren Analyseeinrichtung, ein Anregefilter (350) und ein dem Anregefilter nachgeordnetes Fallindikationsfilter (360) aufweist, das die Ausgangssignale der Auswerteinrichtung erzeugt,
- wobei das Fallindikationsfilter ausschließlich dann aktiviert wird, wenn das Anregefilter angesprochen hat, und
- wobei die Auswerteinrichtung eigene Ausgangssignale an hierarchisch übergeordnete Auswerteinrichtungen ausschließlich dann weiterleitet, wenn das Fallindikationsfilter aktiviert wurde.

8. Feldgerät nach Anspruch 7,
**dadurch gekennzeichnet, dass**
das Anregefilter und/oder das Fallindikationsfilter dynamisch ergänzt wird.

9. Feldgerät nach einem der voranstehenden Ansprüche,
**dadurch gekennzeichnet, dass**
bei der Weiterverarbeitung der Eingangssignale hierarchisch untergeordneter Auswerteinrichtungen eine Informationsverdichtung derart erfolgt, dass die Ausgangssignale eine höhere Informationsdichte aufweisen als die Eingangssignale.

10. Feldgerät nach Anspruch 9,
**dadurch gekennzeichnet, dass**
die Informationsverdichtung erfolgt, indem Informationsanteile der Eingangssignale, die für das Charakterisieren des Betriebszustandes der elektrotechnischen Anlage keine oder eine untergeordnete Bedeutung aufweisen, weggelassen werden.

11. Feldgerät nach einem der voranstehenden Ansprüche,
**dadurch gekennzeichnet, dass**
die Auswerteinrichtung Datenverbindungen nach der Norm IEC61850 verwendet.

12. Feldgerät nach Anspruch 11,
**dadurch gekennzeichnet, dass**
die Auswerteinrichtung, insbesondere deren Analyseeinrichtung, als Eingangssignale die im Object Directory des IEC61850-Standards hinterlegten Augenblickszustände heranzieht.

13. Feldgerät nach Anspruch 12,
**dadurch gekennzeichnet, dass**
die Auswerteinrichtung, insbesondere deren Analyseeinrichtung, die Augenblickszustände mit Zustandsmasken vergleicht, die feldgeräteindividuell oder feldgeräteunabhängig im Feldgerät hinterlegt sind.

14. Feldgerät nach einem der voranstehenden Ansprüche,
**dadurch gekennzeichnet, dass**
die Auswerteinrichtung Ausgangssignale einer hierarchisch untergeordneten Auswerteeinrichtung im Hinblick auf die schaltungstechnische Zuordnung der untergeordneten Auswerteeinrichtung innerhalb der elektrotechnischen Anlage auswertet.

15. Feldgerät nach Anspruch 14,
**dadurch gekennzeichnet, dass**
die Auswerteinrichtung zur schaltungstechnischen Zuordnung der untergeordneten Auswerteeinrichtung auf gemäß IEC61850-Standard abgespeicherte Anlagentopologiedaten der elektrotechnischen Anlage zurückgreift.

16. Elektrotechnische Anlage mit zumindest zwei durch ein Datenübertragungsnetzwerk verbundenen Feldgeräte nach einem der vorangehenden Ansprüche,
**dadurch gekennzeichnet, dass**
die Feldgeräte nach einem Anschluss an das Datenübertragungsnetzwerk selbsttätig mit allen anderen daran angeschlossenen Feldgeräten eine Datenverbindung herstellen, die einer unmittelbar untergeordneten oder einer unmittelbar übergeordneten Hierarchieebene angehören, sowie die Ausgangssignale hierarchisch untergeordneter Feldgeräte als Eingangssignale weiterverarbeiten und eigene Ausgangssignale an hierarchisch übergeordnete Feldgeräte weiterleiten.

## Claims

1. Field device (20, 30, 40) for monitoring an operating state of an electrical engineering installation (10), in particular a transformer substation or a switching substation, having an evaluation device (100, 110, 120), which evaluates input signals (E11-E1n, E21-E2n), which are present on the input side and relate to the electrical engineering installation, on the basis of predetermined criteria and, on the output side, generates an output signal (Ap), which characterizes the respective evaluation result, **characterized**
- **in that** an identification ("type A", "type B") can be input to the evaluation device which specifies the hierarchical level to which the evaluation device is assigned, and
- **in that** the evaluation device is designed such that, after a connection to a data transmission network (50), it automatically produces a data link with all other evaluation devices connected thereto or with all other evaluation devices connected thereto of a predetermined type which belong to a directly lower-order or a directly higher-order hierarchical level,
- the evaluation device further-processing the output signals of hierarchically lower-order evaluation devices as input signals and passing dedicated output signals on to hierarchically higher-order evaluation devices.

2. Field device according to Claim 1, **characterized in that** the field device (400) has at least two evaluation devices (410-450), which are connected to one another via a field-device-internal data transmission network (460).

3. Field device according to Claim 2, **characterized in that** the at least two evaluation devices, in each case after activation of the field-device-internal data transmission network, automatically produce a data link with hierarchically directly lower-order and/or directly higher-order evaluation devices of the field device.

4. Field device according to one of the preceding claims, **characterized in that** the field device has a connection for an external data transmission network (50) for connection to other, external field devices.

5. Field device according to Claim 4, **characterized in that** the evaluation device of the field device is designed such that, after connection to the external data transmission network, it automatically produces a data link with all other evaluation devices connected thereto of other field devices or with all other evaluation devices connected thereto of a predetermined type of the other field devices if these evaluation devices belong to a directly lower-order or a directly higher-order hierarchical level.

6. Field device according to one of the preceding claims,
**characterized in that**
- the evaluation device has a communication device (320), which is designed such that, after a connection to an internal or external data transmission network, it automatically produces a data link with all other communication devices connected thereto of other evaluation devices or with all other communication devices connected thereto of other evaluation devices of a predetermined type if these communication devices belong to a directly lower-order or a directly higher-order hierarchical level, and
- the evaluation device has an analysis device (340), which is connected to the communication device, further-processes output signals of analysis devices of hierarchically lower-order evaluation devices as input
signals and passes dedicated output signals on to analysis devices of hierarchically higher-order evaluation devices by means of the assigned communication device.

7. Field device according to one of the preceding claims, **characterized in that** the evaluation device, in particular its analysis device, has a trigger filter (350) and a case indication filter (360), which is arranged downstream of the trigger filter and generates the output signals of the evaluation device,
- the case indication filter being activated only when the trigger filter has responded, and
- the evaluation device passing dedicated output signals on to hierarchically higher-order evaluation devices only when the case indication filter has been activated.

8. Field device according to Claim 7, **characterized in that** the trigger filter and/or the case indication filter is supplemented in dynamic fashion.

9. Field device according to one of the preceding claims, **characterized in that**, during the further-processing of the input signals of hierarchically lower-order evaluation devices, information compression takes place such that the output signals have a higher information density than the input signals.

10. Field device according to Claim 9, **characterized in that** the information compression takes place by information components of the input signals which do not have any significance or have a subordinate significance for the characterization of the operating state of the electrical engineering installation being omitted.

11. Field device according to one of the preceding claims, **characterized in that** the evaluation device uses data links in accordance with the standard IEC61850.

12. Field device according to Claim 11, **characterized in that** the evaluation device, in particular its analysis device, uses the instantaneous states stored in the object directory of the IEC61850 standard as input signals.

13. Field device according to Claim 12, **characterized in that** the evaluation device, in particular its analysis device, compares the instantaneous states with state masks, which are stored in the field device in a manner which is specific to the field devices or independent of the field devices.

14. Field device according to one of the preceding claims, **characterized in that** the evaluation device evaluates output signals of a hierarchically lower-order evaluation device with respect to the assignment of the lower-order evaluation device in terms of circuitry within the electrical engineering installation.

15. Field device according to Claim 14, **characterized in that** the evaluation device uses installation topology data, which are stored in accordance with the IEC61850 standard, of the electrical engineering installation for the assignment of the lower-order evaluation device in terms of circuitry.

16. Electrical engineering installation having at least two field devices connected by a data transmission network according to one of the preceding claims, **characterized in that**, after a connection to the data transmission network, the field devices automatically produce a data link with all other field devices connected thereto which belong to a directly lower-order or a directly higher-order hierarchical level and further-process the output signals of hierarchically lower-order field devices as input signals and pass dedicated output signals on to hierarchically higher-order field devices.

## Revendications

1. Appareil ( 20, 30, 40 ) sur site pour contrôler un état de fonctionnement d'une installation ( 10 ) électrotechnique, notamment d'un poste de transformation ou d'un poste de sectionnement, comprenant un dispositif ( 100, 110, 120 ) d'évaluation, qui évalue suivant des critères prescrits des signaux ( E11 à E1n, E21 à E2n ) d'entrée s'appliquant du côté entrée et se rapportant à l'installation électrotechnique et produit du côté sortie un signal ( Ap ) de sortie caractérisant le résultat respectif de l'évaluation,
**caractérisé**
- **en ce qu'**il peut être prescrit au dispositif d'évaluation une caractéristique ( "type A", type B") qui indique le niveau de hiérarchie auquel le dispositif d'évaluation est associé, et
- **en ce que** le dispositif d'évaluation est tel qu'il ménage, après un raccordement à un réseau ( 50 ) de transmission de données, automatiquement une liaison de données avec tous les autres dispositifs d'évaluation qui y sont raccordés ou avec tous les autres dispositifs d'évaluation qui y sont raccordés d'un type prescrit, qui appartiennent à un niveau de hiérarchie immédiatement inférieur ou immédiatement supérieur,
- dans lequel le dispositif d'évaluation continue à traiter les signaux de sortie de dispositifs d'évaluation inférieurs hiérarchiquement en tant que signaux d'entrée et achemine ses propres signaux de sortie à des dispositifs d'évaluation supérieurs hiérarchiquement.

2. Appareil sur site suivant la revendication 1,
**caractérisé en ce que**
l'appareil ( 400 ) sur site a au moins deux dispositifs ( 410 à 450 ) d'évaluation qui sont reliés entre eux par un réseau ( 460 ) de transmission de données interne à l'appareil sur site.

3. Appareil sur site suivant la revendication 2,
**caractérisé en ce que**
les au moins deux dispositifs d'évaluation ménagent une liaison de données respectivement après activation du réseau de transmission de données interne à l'appareil sur site automatiquement avec des dispositifs d'évaluation de l'appareil sur site directement inférieurs et/ou directement supérieurs hiérarchiquement.

4. Appareil sur site suivant l'une des revendications précédentes,
**caractérisé en ce que**
l'appareil sur site a une borne pour un réseau ( 50) extérieur de transmission de données pour communiquer avec d'autres appareils sur site extérieurs.

5. Appareil sur site suivant la revendication 4,
**caractérisé en ce que**
le dispositif d'évaluation de l'appareil sur site est tel qu'il ménage une liaison de données, après raccordement au réseau extérieur de communication de données, automatiquement avec tous les autres dispositifs d'évaluation qui y sont raccordés d'autres appareils sur site avec tous les autres dispositifs d'évaluation qui y sont raccordés d'un type prescrit des autres appareils de champ, dans la mesure où ceux-ci appartiennent à un niveau hiérarchique immédiatement inférieur ou immédiatement supérieur.

6. Appareil sur site suivant l'une des revendications précédentes,
**caractérisé en ce que**
- le dispositif d'évaluation a un dispositif ( 320 ) de communication qui est tel qu'il ménage une liaison de données, après avoir été raccordé à un réseau de transmission de données interne ou externe, automatiquement avec tous les autres dispositifs de communication qui y sont raccordés d'autres dispositifs d'évaluation ou avec tous les autres dispositifs de communication qui y sont raccordés d'autres dispositifs d'évaluation d'un type prescrit, dans la mesure où ceux-ci appartiennent à un niveau hiérarchique immédiatement inférieur ou immédiatement supérieur et
- le dispositif d'évaluation a un dispositif ( 340 ) d'analyse, qui est relié au dispositif de communication, qui continue à traiter en tant que signaux d'entrée les signaux de sortie de dispositifs d'analyse de dispositifs d'évaluation inférieurs hiérarchiquement et qui achemine ses propres signaux de sortie au moyen du dispositif de communication associé aux dispositifs d'analyse de dispositifs d'évaluation supérieurs hiérarchiquement.

7. Appareil sur site suivant l'une des revendications précédentes,
**caractérisé en ce que**
le dispositif d'évaluation, notamment son dispositif d'analyse, a un filtre ( 350 ) d'excitation et un filtre ( 360 ) d'indication de pente qui est monté en aval du filtre d'excitation et qui produit les signaux de sortie du dispositif d'évaluation,
- dans lequel le filtre d'indication de pente est activé exclusivement lorsque le filtre d'excitation a répondu et
- dans lequel le dispositif d'évaluation achemine ses propres signaux de sortie exclusivement au dispositif d'évaluation supérieur hiérarchiquement lorsque le filtre d'indication de pente a été activé.

8. Appareil sur site suivant la revendication 7,
**caractérisé en ce que**
le filtre d'excitation et/ou le filtre d'indication de pente est complété dynamiquement.

9. Appareil sur site suivant l'une des revendications précédentes,
**caractérisé en ce que**
lorsque l'on continue à traiter les signaux d'entrée de dispositifs d'évaluation inférieurs hiérarchiquement il se produit une compression d'informations, de façon à ce que les signaux de sortie aient une densité d'information plus grande que les signaux d'entrée.

10. Appareil sur site suivant la revendication 9,
**caractérisé en ce que**
la compression d'informations s'effectue en abandonnant des parties d'information des signaux d'entrée qui n'ont pas d'importance ou qui ont une importance secondaire pour la caractérisation de l'état de fonctionnement de l'installation électrotechnique.

11. Appareil sur site suivant l'une des revendications précédentes,
**caractérisé en ce que**
le dispositif d'évaluation utilise des liaisons de données suivant la Norme IEC61850.

12. Appareil sur site suivant la revendication 11,
**caractérisé en ce que**
le dispositif d'évaluation, notamment son dispositif d'analyse, tire parti comme signaux d'entrée des états instantanés mémorisés dans l'Object Directory de la Norme IEC61850.

13. Appareil sur site suivant la revendication 12,
**caractérisé en ce que**
le dispositif d'évaluation, notamment son dispositif d'analyse, compare les états instantanés à des masques d'état qui sont mémorisés dans l'appareil sur site, individuellement pour chaque appareil sur site ou indépendamment de l'appareil sur site.

14. Appareil sur site suivant l'une des revendications précédentes,
**caractérisé en ce que**
le dispositif d'évaluation évalue des signaux de sortie d'un dispositif d'évaluation inférieur hiérarchiquement au regard de l'association du point de vue de la technique des circuits du dispositif d'évaluation inférieur au sein de l'installation électrotechnique.

15. Appareil sur site suivant la revendication 14,
**caractérisé en ce que**
le dispositif d'évaluation s'en remet, pour l'association, du point de vue de la technique des circuits, du dispositif d'évaluation inférieur, à des données de topologie de l'installation électrotechnique mémorisées suivant la Norme IEC61850.

16. Installation électrotechnique ayant au moins deux appareils sur site reliés par un réseau de transmission de données suivant l'une des revendications précédentes,
**caractérisé en ce que**
les appareils sur site ménagent, après un raccord au réseau de transmission de données, automatiquement une liaison de données avec tous les autres appareils sur site qui y sont raccordés qui appartiennent à un niveau hiérarchique directement inférieur ou directement supérieur, continuent à traiter comme signaux d'entrée les signaux de sortie d'appareils sur site inférieurs hiérarchiquement et acheminent leurs propres signaux de sortie aux appareils sur site supérieurs hiérarchiquement.
